# FASCICULE DE BREVET EUROPEEN

(11) **EP 1 972 110 B1**
(45) Date de publication et mention de la délivrance du brevet: **17.06.2009**
(21) Numéro de dépôt: 06847229.9
(22) Date de dépôt: 29.12.2006
(51) Int. Cl.: H04L 12/56

(54) **RÉSERVATION IMPLICITE DE RESSOURCES DANS UN RÉSEAU DE COMMUNICATION DE TYPE POINT À MULTIPOINT OU MULTIPOINT À MULTIPOINT**
IMPLIZITE RESERVIERUNG VON RESSOURCEN IN EINEM PUNKT-ZU-MULTIPUNKT- ODER MULTIPUNKT-ZU-MULTIPUNKT-KOMMUNIKATIONSNETZWERK
IMPLICIT RESERVATION OF RESOURCES IN A COMMUNICATION NETWORK OF POINT-TO-MULTIPOINT OR MULTIPOINT-TO-MULTIPOINT TYPE

(30) Priorité: 03.01.2006 FR 0650017
(43) Date de publication de la demande: 24.09.2008
(73) Titulaire: Alcatel Lucent, 75008 Paris (FR)
(72) Inventeur: POLETTI, Claude, F-92260 Fontenay-aux-Roses (FR); AIME, Christelle, F-78380 Bougival (FR); FARINEAU, Jean, F-92300 Levallois Perret (FR); CARTIGNY, Marc, F-78360 Montesson (FR)
(74) Mandataire: Hedarchet, Stéphane
(86) Numéro de dépôt international: PCT/FR2006/051445
(87) Numéro de publication internationale: WO 2007/077388

(56) Documents cités:
- EP-A- 1 478 195
- US-A1- 2002 080 816

## Description

L'invention concerne les réseaux de communication de type point à multipoint ou multipoint à multipoint, dans lesquels sont définies des liaisons radio partageant des ressources de transmission (par exemple selon la technique appelée DAMA (pour « Demand Assignment Multiple Access »)), et plus particulièrement la réservation des ressources des liaisons radio au sein de tels réseaux.

On entend ici par « réseaux de communication de type point à multipoint ou multipoint à multipoint » aussi bien les réseaux de communication par satellite que les réseaux de communication terrestre radio, avec ou sans extension satellitaire (ou déport(s) par satellite) sur une partie de leurs liaisons. Il pourra donc s'agir, notamment, de réseaux mobiles ou cellulaires de type 2G (par exemple GSM ou CDMA), 2,5G (par exemple GPRS/EDGE), ou 3G (par exemple UMTS ou CDMA2000), ou de réseaux nomades par exemple de type WiFi ou WiMax.

Par ailleurs, on entend ici par « partage de ressources » un partage des ressources (ou capacité) de transmission entre différentes liaisons de communication, résultant d'une répartition de la capacité globale en fonction du débit des données qu'elles doivent transmettre, ou en d'autres termes en fonction du nombre de canaux (actifs) sur chaque liaison.

Les réseaux de communication précités comportent généralement des stations de trafic (ou sites distants) couplées chacune par une liaison radio, par exemple via un satellite relais, à un centre de gestion de trafic, lui-même couplé à un coeur de réseau (ou « Core Network »), par exemple de type PLMN. Les stations de trafic gèrent localement les communications des terminaux d'abonnés qui sont placés dans leur zone de couverture radio en fonction des ressources (ou canaux) de transmission qui leurs sont respectivement allouées, momentanément (à chaque cycle d'allocation de ressources), par le centre de gestion de trafic.

Par exemple, dans le cas d'un réseau de téléphonie cellulaire de type GSM, à extension satellitaire, chaque station de trafic comporte :
- une station de base appelée BTS (pour « Base Transceiver Station ») gérant au moins une cellule radio dans laquelle des terminaux d'abonnés peuvent établir des communications mobiles,
- un compresseur chargé de supprimer dans le trafic à transmettre au centre de gestion tous les éléments qui ne sont pas essentiels ou qui sont redondants (comme par exemple les trames de silence, les trames de bourrage, les trames non valides, les trames de repos, les bits portés par les canaux de trafic au repos, ou les fanions entre trames de signalisation), et
- un terminal de transmission satellitaire chargé de recevoir le trafic provenant du centre de gestion et de déterminer la répartition entre ses différents types de trafic à transmettre des ressources (ou canaux) de transmission qui ont été momentanément allouées à sa liaison satellitaire par le centre de gestion.

Dans ce même exemple, le centre de gestion de trafic comprend :
- un contrôleur de station de base (ou BSC pour « Base Station Controller ») chargé principalement de gérer les ressources (ou canaux) de transmission des liaisons satellite des différentes stations de base qui lui sont rattachées ainsi que les fonctions d'exploitation et de maintenance desdites stations de base,
- des démodulateurs, en nombre égal au nombre de porteuses partagées par l'ensemble des liaisons radio, et chargés chacun de démoduler une porteuse provenant de stations de trafic afin de restituer les trames compressées destinées au contrôleur de station de base,
- des compresseurs/décompresseurs en nombre égal au nombre de démodulateurs, et chargés chacun de décompresser les trames démodulées et compressées par l'un des démodulateurs et de compresser les trames à transmettre, délivrées par le contrôleur de station de base,
- un modulateur chargé de moduler les trames compressées destinées aux stations de trafic, via une fréquence porteuse, et
- un module de gestion chargé de déterminer régulièrement, par exemple selon la technique DAMA, la répartition entre les différentes liaisons satellite Li, gérées par son centre de gestion, des ressources satellitaires (incluant des marges d'allocation), en fonction de données d'information représentatives des taux d'occupation, par type de trafic, des ressources précédemment allouées aux différentes liaisons satellite.

Dans les réseaux précités actuels, chaque station de trafic (ou site distant) doit adresser au centre de gestion des demandes de réservation de ressources explicites en fonction de ses besoins du moment, ce qui nécessite un dialogue (ou couplage « direct ») avec le module de gestion de ressources du centre de gestion. Un tel couplage rend complexe l'intégration des équipements de compression/décompression avec les équipements de transmission, et accroît la consommation de capacité sur le lien considéré, pour ces besoins de couplage.

Par ailleurs, lorsqu'une station de trafic ne peut pas dialoguer avec son centre de gestion, ce dernier ne peut pas prendre en compte ses besoins dans ses calculs cycliques de répartition des ressources de transmission et/ou elle ne peut pas savoir quelles ressources de transmission lui ont été allouées.

En outre, dans les réseaux précités il n'existe pas de véritable mécanisme de limitation d'appel destiné à éviter la saturation d'une liaison (pouvant entraîner une dégradation des appels en cours, voire même des pertes d'appels (ou « call drops ») en cas de congestion prolongée).

De plus, dans les réseaux précités il n'existe pas de mécanisme permettant d'anticiper efficacement sur l'évolutivité du trafic, compte tenu du fait, d'une première part, que le délai de réaction de la boucle d'allocation de ressources s'établit généralement entre 1 et 3 secondes, d'une deuxième part, que pendant ce temps de réaction plusieurs nouveaux appels sont susceptibles de se produire, d'une troisième part, que pendant ce temps de réaction il existe une forte probabilité que sur plusieurs canaux déjà établis des utilisateurs momentanément silencieux se mettent à parler, et d'une quatrième part, que pendant ce temps de réaction des canaux attribués à du trafic de données (ou « data traffic ») deviennent actifs. Certes dans ce dernier cas il a été proposé dans le document brevet EP 1478195 (ou WO 2004 FR 01104) d'anticiper sur l'évolutivité du trafic. Mais, cela ne se fait que localement dans chaque station de trafic à partir des ressources qui ont été allouées par le centre de gestion et sans savoir avec quelle marge les ressources allouées ont pris en compte l'évolutivité du trafic.

L'invention a donc pour but de remédier à tout ou partie des inconvénients précités.

Elle propose à cet effet un procédé de réservation de ressources dans un réseau de communication de type point ou multipoint à multipoint dans lequel ont été établies des liaisons radio entre des stations de trafic distantes et un centre de gestion, ces liaisons partageant des ressources allouées dynamiquement par le centre de gestion.

Ce procédé consiste, lorsqu'une station de trafic a besoin de ressources supplémentaires pour augmenter le trafic utile qu'elle doit transmettre au centre de gestion, à adjoindre à ce trafic utile un premier trafic représentatif d'une marge choisie et un second trafic représentatif d'une anticipation du besoin de ressources supplémentaires, afin de solliciter implicitement le centre de gestion, puis à déterminer dans cette station de trafic si des ressources supplémentaires ont été allouées par le centre de gestion, et en cas d'allocation de ressources supplémentaires, à procéder à une augmentation du trafic utile correspondant au plus à la somme des ressources correspondant au premier trafic (marge initiale) et des ressources supplémentaires allouées, ou si aucune ressource supplémentaire n'a été allouée, à bloquer tout établissement d'un nouveau canal de trafic jusqu'à obtention de ressources supplémentaires (c'est-à-dire d'une capacité suffisante).

L'invention propose également un réseau de communication de type point à multipoint ou multipoint à multipoint, et comprenant au moins un centre de gestion et des stations de trafic distantes entre lesquels ont été établies des liaisons radio partageant des ressources allouées dynamiquement par le centre de gestion.

Ce réseau se caractérise par le fait que chacune de ses stations de trafic est chargée, lorsqu'elle a besoin de ressources supplémentaires pour augmenter le trafic utile qu'elle doit transmettre au centre de gestion, d'adjoindre au trafic utile en cours un premier trafic représentatif d'une marge choisie et un second trafic représentatif d'une anticipation du besoin de ressources supplémentaires, afin de solliciter implicitement le centre de gestion, puis de déterminer si des ressources supplémentaires ont été effectivement allouées par le centre de gestion, et en cas d'allocation de ressources supplémentaires, à procéder à une augmentation du trafic utile correspondant au plus à la somme des ressources correspondant au premier trafic (marge initiale) et des ressources supplémentaires allouées.

Le réseau selon l'invention pourra comporter des caractéristiques complémentaires qui pourront être prises séparément et/ou en combinaison, et en particulier :
- chaque station de trafic peut être chargée d'adjoindre à son trafic utile augmenté du premier trafic un second trafic correspondant à un nombre entier N de pas d'allocation de ressources du centre de gestion, avec N >0 ;
- chaque station de trafic peut être chargée d'adjoindre à son trafic utile augmenté du premier trafic un second trafic constant ou bien variable en fonction de statistiques locales d'évolution temporelle de son trafic utile ou des nombres respectifs de canaux de transmission utilisés par son trafic utile pour transmettre des trames de types différents ;
- chaque station de trafic peut être chargée d'affecter un niveau de priorité au second trafic et au moins un niveau de priorité, supérieur à celui du second trafic, à son trafic utile, ainsi qu'éventuellement un niveau de priorité, compris entre ceux des second trafic et trafic utile, au premier trafic ;
- chaque station de trafic peut être chargée de transmettre le second trafic en l'absence de trafic utile en attente de transmission ;
- en variante, chaque station de trafic peut être chargée de multiplexer des trames qui constituent le second trafic avec les trames qui constituent le trafic utile augmenté du premier trafic et qui sont en attente de transmission, selon une proportion choisie ;
- chaque station de trafic peut être chargée d'adjoindre à son trafic utile augmenté du premier trafic un second trafic constitué de trames de bourrage et de trames témoin.
   ➢ le centre de gestion peut alors être chargé de renvoyer chaque trame témoin qu'il reçoit vers la station de trafic qui l'a transmise, et chaque station de trafic peut être chargée de déterminer le temps mis par chaque trame témoin pour revenir auprès d'elle, et de détecter une congestion du second trafic lorsque ce temps est supérieur à un seuil choisi ;
   ➢ dans une première variante, le centre de gestion peut être chargé de détecter les instants de réception des trames témoin, de déterminer un intervalle de temps séparant les instants de réception des trames témoin successives qui proviennent de chaque station de trafic, et de transmettre un signal d'alerte à une station de trafic lorsque la durée qui sépare les instants de réception de trames témoin successives qu'elle a transmises est supérieure à un seuil choisi. Dans ce cas, chaque station de trafic peut être chargée de détecter une congestion du second trafic lorsqu'elle reçoit un signal d'alerte en provenance du centre de gestion ;
   ➢ dans une deuxième variante, non exclusive de la première, chaque station de trafic peut être chargée de transmettre des trames témoin numérotées. Dans ce cas, le centre de gestion peut être chargé de détecter le numéro qui est associé à chaque trame témoin transmise par chaque station de trafic, et de transmettre un signal d'alerte à une station de trafic lorsqu'il ne reçoit pas au moins l'une des trames témoin qu'elle a successivement transmises, et chaque station de trafic peut être chargée de détecter une congestion du second trafic lorsqu'elle reçoit un signal d'alerte en provenance du centre de gestion ;
   ➢ dans une troisième variante, chaque station de trafic peut être chargée de transmettre des trames témoin munies d'un marqueur temporel représentatif d'un horaire de création synchronisé par rapport à une horloge du centre de gestion. Dans ce cas, le centre de gestion peut être chargé de dater l'instant de réception de chaque trame témoin transmise par chaque station de trafic, de déterminer la durée de transmission de chaque trame témoin à partir de son horaire de création et de son instant de réception, et de transmettre un signal d'alerte à une station de trafic en cas de détection d'une variation de durée de transmission d'une trame témoin qu'elle a transmise, et chaque station de trafic peut être chargée de détecter une congestion du second trafic lorsqu'elle reçoit un signal d'alerte en provenance du centre de gestion ;
   ➢ le centre de gestion peut être chargé de transmettre des signaux d'alerte constitués d'un indicateur binaire. En variante, le centre de gestion peut être chargé de transmettre des signaux d'alerte constitués d'une valeur numérique représentative d'une durée déterminée lorsque celle-ci est supérieure au seuil et/ou du nombre de trames témoin non reçues. Par exemple, le centre de gestion peut être chargé de transmettre des signaux d'alerte constitués d'une valeur numérique représentative de l'amplitude d'une variation de durée de transmission détectée ;
   ➢ le centre de gestion peut être chargé de détecter chaque affaiblissement de réception de trafic et chaque dégradation de liaison. Ainsi, lorsqu'il ne reçoit pas de trame(s) témoin en provenance d'une station de trafic pendant une durée supérieure à un seuil choisi, il transmet à cette station de trafic un signal d'avertissement signalant l'impossibilité de prise de décision ;
   ➢ chaque station de trafic peut être chargée, lorsqu'elle détecte une congestion du second trafic, de maintenir l'adjonction du second trafic et de considérer comme ressources allouées les ressources qui étaient disponibles avant cette détection de congestion du second trafic ;
   ➢ dans une première variante, chaque station de trafic peut être chargée, lorsqu'elle détecte une congestion du second trafic, de réduire progressivement le second trafic jusqu'à disparition de la congestion du second trafic, et de considérer comme ressources allouées les ressources disponibles au moment de la disparition ;
   ➢ dans une deuxième variante, chaque station de trafic peut être chargée, lorsqu'elle ne détecte pas de congestion du second trafic, d'augmenter progressivement le second trafic jusqu'à ce qu'elle détecte une congestion du second trafic, et de considérer comme ressources allouées les ressources qui étaient disponibles avant cette détection de congestion du second trafic ;
   ➢ dans une troisième variante, correspondant à l'utilisation de signaux d'alerte constitués d'une valeur numérique représentative d'une durée séparant les instants de réception de trames témoin successives, chaque station de trafic peut être chargée de moduler le second trafic par une valeur fonction de la différence entre la valeur numérique du signal d'alerte reçu et une valeur moyenne de cette valeur numérique ;
   ➢ chaque station de trafic peut être chargée, lorsqu'elle détecte une insuffisance des ressources qui lui ont été allouées, de supprimer des trames sur des canaux de transmission (de sa liaison) qui étaient sans activité avant cette détection.

L'invention trouve une application particulièrement intéressante, bien que non exclusive, dans tous les réseaux de communication de type point à multipoint ou multipoint à multipoint tels que les réseaux de communication par satellite, les réseaux de communication terrestre radio, comme par exemple les réseaux sur base E1 ouT1 et analogues, ou sur base Ethernet, IP, Frame Relay et ATM, et les réseaux de communication terrestre radio utilisant une extension satellitaire (ou des déport(s) par satellite) sur une partie de leurs liaisons, comme par exemple les réseaux cellulaires de type TDMA ou CDMA.

D'autres caractéristiques et avantages de l'invention apparaîtront à l'examen de la description détaillée ci-après, et des dessins annexés, sur lesquels:
- la figure 1 illustre de façon schématique une partie d'un réseau de communication à extension satellitaire pouvant mettre en oeuvre l'invention,
- la figure 2 illustre de façon schématique un exemple de réalisation d'un centre de gestion participant à la mise en oeuvre de l'invention,
- la figure 3 illustre de façon schématique un exemple de réalisation d'une station de trafic selon l'invention,
- la figure 4 est un diagramme illustrant de façon schématique un exemple de courbe d'évolution en fonction du temps (t) de la capacité utilisée (CU) par une station de trafic, respectivement pour le trafic utile (TU), le trafic de lissage (TL), le trafic lissé (TL' = TU + TL), et le trafic anticipatif (TA),
- la figure 5 est un diagramme illustrant de façon schématique un exemple d'histogramme cumulé de variations de trafic utile TL en kilo bits par seconde (kbps), et
- la figure 6 illustre de façon schématique un exemple de réalisation d'un second module de traitement implanté dans un terminal de transmission d'une station de trafic selon l'invention.

Les dessins annexés pourront non seulement servir à compléter l'invention, mais aussi contribuer à sa définition, le cas échéant.

L'invention concerne la réservation implicite de ressources de transmission (et ses conséquences) au sein d'un réseau de communication de type point à multipoint ou multipoint à multipoint dans lequel sont définies des liaisons radio partageant des ressources.

Dans ce qui suit, on considère à titre d'exemple illustratif (non limitatif) que le réseau de communication est un réseau de téléphonie mobile (ou cellulaire), par exemple de type GSM (ou 2G), à extension satellitaire (ou déport(s) par satellite). Mais, l'invention ne se limite pas à ce type de réseau. Comme indiqué précédemment, elle concerne tous les réseaux de communication de type point à multipoint ou multipoint à multipoint tels que les réseaux de communication par satellite, les réseaux de communication terrestre radio, comme par exemple les réseaux sur base E1 ou T1 et analogues, ou sur base Ethernet, IP, Frame Relay et ATM, et les réseaux de communication terrestre radio utilisant une extension satellitaire (ou au moins un déport par satellite) sur une partie de leurs liaisons, comme par exemple les réseaux cellulaires de type TDMA ou CDMA.

Par ailleurs, dans ce qui suit on décrira une mise en oeuvre de l'invention au niveau de l'interface BSC-BTS du réseau GSM. Mais l'invention ne se limite pas à ce seul type d'interface. Elle concerne toute autre interface du réseau et peut également s'appliquer au partage de ressources de transmission entre au moins deux types d'interface d'un même réseau.

En outre, on considère dans ce qui suit que la technique d'allocation et de répartition des ressources de transmission est dérivée de la technique dite DAMA. Mais l'invention n'est pas limitée à ce type de technique. Elle concerne en effet toute technique permettant de répartir dynamiquement des ressources de transmission entre des liaisons de communication, éventuellement satellitaires.

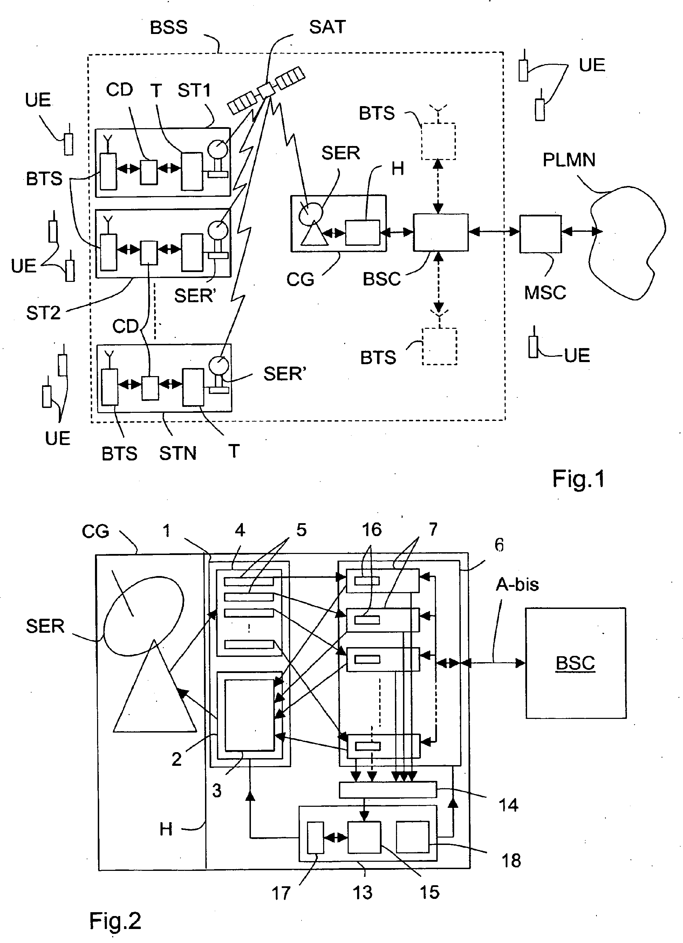

On se réfère tout d'abord à la figure 1 pour décrire un exemple de réseau GSM à extension satellitaire pouvant mettre en oeuvre l'invention, dans l'application non limitative précitée.

Un réseau de communication GSM à extension satellitaire peut, d'une façon très schématique mais néanmoins suffisante à la compréhension de l'invention, être résumé à un sous-système radio classique, appelé système de station de base BSS (pour « Base Station System »), couplé à un coeur de réseau ou « Core Network », ici matérialisé (à titre d'exemple illustratif) sous la forme d'un réseau filaire public, tel qu'un réseau PLMN (pour « Public Land Mobile Network »). Le couplage entre le système BSS et le réseau filaire PLMN est ici assuré par un centre de commutation mobile MSC (ou « Mobile Switching Centre »).

Le centre de commutation mobile MSC est chargé de réaliser toutes les opérations nécessaires à la gestion des communications avec les terminaux d'utilisateurs UE.

Le système BSS comporte tout d'abord au moins un centre de gestion de trafic CG, par exemple agencé sous la forme d'un « hub » H couplé à une station émettrice/réceptrice SER par laquelle s'effectuent les liaisons satellite (Li) avec un satellite relais de communications SAT. Dans des variantes, le centre de gestion CG et le hub H (centre d'échange avec des stations de trafic STi distantes) peuvent être dissociés et/ou espacés l'un de l'autre.

Le système BSS comporte également au moins un contrôleur de station de base BSC (ou « Base Station Controller ») couplé, d'une part, au centre de gestion de trafic CG, et plus précisément à son hub H, et d'autre part, au centre de commutation mobile MSC. Ce contrôleur BSC est principalement chargé de gérer les ressources des liaisons satellite (Li) des différentes stations de base BTS qui lui sont rattachées ainsi que les fonctions d'exploitation et de maintenance de ces stations de base BTS.

Le couplage entre le contrôleur BSC et les stations de base BTS s'effectue par une interface appelée A-bis. Cette interface est de type synchrone. Elle opère avec un tramage de type G.704 (on parle alors de trames E1 dont une portion ou la totalité comporte des données utiles).

Le système BSS comporte enfin plusieurs stations de trafic distantes STi (i = 1 à N) associées chacune à au moins une zone de couverture dans laquelle des terminaux d'utilisateurs UE peuvent établir des communications. Chaque station de trafic STi comprend au moins une station de base, appelée BTS (Base Transceiver Station) dans le cas d'un réseau GSM, un compresseur/décompresseur CD, et un terminal de transmission satellitaire T couplé à un dispositif d'émission/réception SER' par lequel s'effectue la liaison satellite Li avec le satellite SAT.

Chaque station de base BTS définit une ou des zones de couverture de la station de trafic STi. On notera, comme cela est illustré en pointillés sur la figure 1, que le contrôleur BSC peut être également couplé directement, via des interfaces de type A-bis à des stations de base BTS, indépendantes des liaisons satellite Li.

Le centre de gestion de trafic CG, selon l'invention, est notamment destiné à gérer les ressources du satellite SAT et plus précisément à répartir ses ressources entre les différentes liaisons Li établies entre la station émettrice/réceptrice SER et les stations de trafic distantes STi. Ces liaisons Li utilisent une ressource partagée (porteuse Lf) en mode « Forward » ou « downlink » (c'est-à-dire du hub H vers les stations distantes STi) et un ensemble de porteuses (Lr) partagées par l'ensemble des liaisons en mode « Return » ou « uplink » (c'est-à-dire des stations distantes STi vers le hub H).

Comme cela est illustré sur la figure 2, le hub H (qui fait ici partie du centre de gestion de trafic CG) comporte tout d'abord un modem 1 constitué d'un premier ensemble 2 de modulateur(s) 3 et d'un second ensemble 4 de démodulateurs 5.

Dans l'exemple illustré, le premier ensemble 2 comporte un unique modulateur 3 chargé de produire une porteuse modulée exploitée par l'ensemble des sites distants STi, et de moduler les trames provenant du contrôleur BSC, et destinées à l'ensemble des stations de trafic distantes STi via la fréquence porteuse Lf.

Le second ensemble 4 comporte un nombre de démodulateurs 5 égal au nombre de porteuses Lr utilisées par les stations de trafic STi. Chaque démodulateur 5 est destiné à démoduler la porteuse provenant d'une station de trafic distante STi, et ainsi restituer les trames compressées destinées au contrôleur BSC. Par exemple, le modem 1 est destiné à assurer l'émission/réception en « full-duplex » d'intervalles de temps (ou « time slots »), qui correspond au mode de transmission TDMA.

Le hub H comporte également des moyens de compression et de décompression (ou expansion) 6 couplés au modem 1 et comportant, dans l'exemple illustré, autant de compresseurs/décompresseurs (ou compresseurs/expanseurs) 7 que de démodulateurs 5. Plus précisément, chaque compresseur/décompresseur 7 est alimenté en trames démodulées et compressées par l'un des démodulateurs 5, par exemple via une matrice de commutation (non représentée), et alimente en trames compressées à moduler l'un des modulateurs 3 via cette même matrice de commutation.

La partie compression d'un compresseur/décompresseur 7 assure la compression des trames à transmettre et l'adaptation du format des blocs de données à l'interface avec le modem 1, laquelle est de type Ethernet, IP ou ATM. La partie décompression d'un compresseur/décompresseur 7 assure l'adaptation à l'interface avec le modem 1, laquelle est généralement du même type que celle de la partie compression, et la restitution, par décompression, des trames initiales (c'est-à-dire telles qu'elles étaient avant d'être compressées dans une station de trafic STi).

Toute technique de compression reposant sur l'analyse de l'évolution temporelle des contenus respectifs des canaux de transmission peut être utilisée. Il est rappelé qu'un canal est dit passif lorsqu'il présente un motif binaire statique ou répétitif, dit motif de repos, tandis qu'un canal est dit actif lorsqu'il ne présente pas un motif statique ou répétitif. En présence d'une compression des silences, des trames non valides et/ou des trames de repos, un canal est dit passif si les trames qu'il supporte sont des trames identifiées par leur entête en tant que trame de silence, trame non valide ou trame de repos. Seuls les canaux actifs sont intégralement transmis (sans compression), les canaux inactifs étant compressés, c'est-à-dire que les éléments inutiles ou redondants sont supprimés avant transmission (éventuellement par satellite) et restitués dans une forme identique ou proche lors de la décompression.

Il est important de noter qu'il n'y a pas de bijection entre le nombre de porteuses Lr et le nombre de sites distants STi. En revanche, il y a nécessairement bijection entre un compresseur distant d'un site distant STi, et donc une liaison Li, et un compresseur/décompresseur 7 du hub H. Par ailleurs, un compresseur/décompresseur 7 du hub H alimente plusieurs liaisons Li, donc plusieurs sites distants, et donc plusieurs décompresseurs (ou expanseurs), un décompresseur par site distant STi, chaque décompresseur restituant la même trame que les autres décompresseurs opérant sur la même trame compressée.

L'invention s'applique aux trames dont la dimension (ou le format) varie en fonction du nombre de canaux actifs et donc du débit de la liaison, comme cela est notamment décrit dans le document brevet EP 1478195 (ou WO 2004 FR 01104).

Le hub H comprend également un module de gestion 13 couplé au modem 1 et aux moyens de compression et décompression 6 et plus précisément à ses différents compresseurs/décompresseurs 7, de préférence par l'intermédiaire d'un module de médiation et de concentration 14.

Ce module de gestion 13 est chargé de déterminer, de préférence de façon périodique (ou cyclique), une répartition primaire, entre les différentes liaisons satellite Li que gère son centre de gestion CG, des ressources satellitaires incluant des marges d'allocation. Cette détermination s'effectue au moins en fonction de premières données d'information représentatives des taux d'occupation, par type de trafic, des ressources précédemment allouées aux différentes liaisons satellite Li. Chaque station de trafic STi peut ainsi déterminer une répartition secondaire, entre ses différents types de trafic, des ressources qui ont été allouées à sa liaison par la répartition primaire, compte tenu au moins de ses propres taux d'occupation par type de trafic. On peut par exemple utiliser la technique de détermination de répartition secondaire décrite dans le document brevet EP 1478195 (ou WO 2004 FR 01104).

Dans l'exemple ici décrit, le module de gestion 13 fonctionne selon une technique d'allocation dérivée de la technique dite DAMA (pour « Demand Assignment Multiple Access »). Dans cette technique DAMA dérivée, le module de gestion 13 comporte un module d'allocation de ressources 15 chargé de déterminer la répartition primaire des ressources en fonction des taux d'occupation par type de trafic. Ces taux d'occupation lui sont délivrés par les compresseurs/décompresseurs 7, et plus précisément par un module d'évaluation de charge 16 qu'ils comprennent chacun, via le module de médiation et de concentration 14. Chaque module d'évaluation de charge 16 agit en sortie de la fonction de décompression sur les trames décompressées. Il détermine dans chaque trame décompressée des premières données d'information représentatives des taux d'occupation par type de trafic (trafic de signalisation de compression, trafic de signalisation réseau (ici GSM), trafic voix et trafic de données, par exemple).

Les premières données d'information sont soit contenues dans les trames reçues (elles ont par conséquent été précédemment déterminées par les stations de trafic STi à partir des flux de tout type reçus de sa (ou ses) station(s) de base BTS), soit déterminées à partir du contenu des trames reçues.

Dans un cas comme dans l'autre, le module d'évaluation de charge 16 transmet au module d'allocation de ressources 15, lors de chaque cycle (ou période) d'allocation, les taux d'occupation par type de trafic, pour chaque liaison satellite Li. Il est rappelé ici que le délai d'allocation de ressources est de l'ordre de une à trois secondes pour un système opérant en mode DAMA.

Pour déterminer la répartition primaire, le module d'allocation de ressources 15 stocke préférentiellement tous les taux d'occupation par type de trafic et par liaison Li, qu'il reçoit des modules de détection 16. Puis, il détermine, de préférence par extrapolation, pour chaque station de trafic STi (ou liaison Li), les ressources, hors marge d'allocation, dont elle a besoin pour chacun de ses types de trafic compte tenu des taux d'occupation par type de trafic (venant d'être déterminés).

Cette extrapolation peut également prendre en compte les besoins de capacité extrapolés des stations de trafic STi. En effet, en raison de l'écart temporel entre la mesure de capacité utilisée et l'allocation effective de capacité, le flux appliqué en entrée de la station de trafic STi par la station de base BTS associée peut excéder la capacité allouée par le centre de gestion CG. Le processus d'extrapolation introduit une marge destinée à réduire le risque de congestion lié à cet écart temporel entre la mesure et l'allocation effective de capacité.

Lors de chaque cycle d'allocation, le module d'allocation de ressources 15 reçoit donc des premières données d'information (taux d'occupation constaté par liaison Li), et détermine des marges d'allocation à partir de ces données reçues et de données d'évolution de trafic caractérisant chacune des liaisons Li (ou chaque station de trafic STi) et préférentiellement stockées dans une première mémoire 17 du module de gestion 13.

Ces données d'évolution de trafic peuvent être représentatives soit d'un modèle statique (ou analytique) d'évolution de trafic, qui peut être éventuellement renouvelé régulièrement, soit d'un modèle dynamique d'évolution de trafic.

La détermination des marges d'allocation et leur répartition entre les différentes liaisons Li peuvent par exemple se faire au moyen de la technique décrite dans le document brevet EP 1478195 (ou WO 2004 FR 01104).

La répartition des différentes marges constitue un point de fonctionnement qui est actualisé à chaque cycle compte tenu des premières données d'information.

La marge totale Mi attribuée à chaque liaison satellite Li est ajoutée aux ressources Ri qui ont été précédemment extrapolées pour elle. Cela fournit la répartition primaire du cycle d'allocation.

Les moyens de compression/décompression 6 et le module de gestion 13 constituent préférentiellement un compresseur assurant la fonction de gestion DAMA.

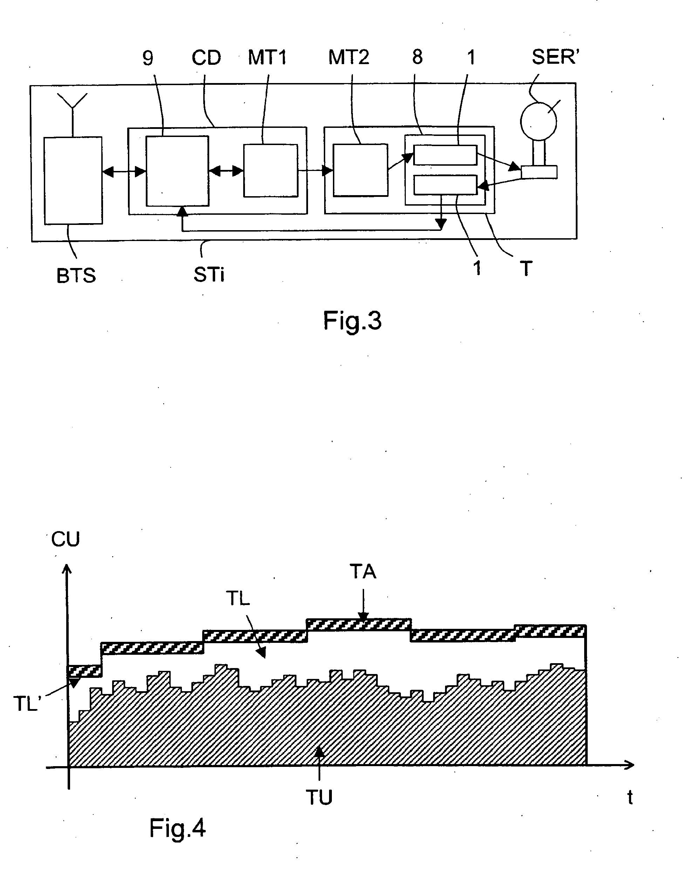

On se réfère maintenant à la figure 3 pour décrire un exemple de réalisation d'une station de trafic STi selon l'invention.

Le compresseur/décompresseur CD de chaque station de trafic STi est du type de ceux que comprend le centre de gestion CG. Il comprend notamment un module de compression/décompression 9 et un premier module de traitement MT1 sur lequel on reviendra plus loin. Il est par ailleurs couplé à la station de base BTS via une interface G.703 (non représentée).

Le module de compression/décompression 9 reçoit de la station de base BTS des flux, tels que des trames de voix, des trames de données, des trames de signalisation, ou des flux auxiliaires (flux externes multiplexés avec les flux précédents compressés), et délivre en sortie un trafic utile (compressé) TU auquel correspondent des ressources allouées par le centre de gestion CG lors de chaque cycle d'allocation.

Le terminal de transmission satellitaire T, de chaque station de trafic STi, comprend tout d'abord un modem 8 du type de celui que comprend le centre de gestion CG. Ce modem 8 comprend plus précisément une partie 10 dédiée à la modulation des trames compressées à transmettre au centre de gestion CG et une partie 11 dédiée à la démodulation des trames compressées et modulées provenant du centre de gestion CG.

Chaque fois qu'un nouvel appel est détecté, ou qu'un canal au repos passe à l'état actif (retour à la parole après une période de silence), ou encore qu'un canal devient actif (présence d'une trame de signalisation ou d'un paquet de données), la station de trafic STi a besoin de ressources supplémentaires pour augmenter le trafic utile (compressé) TU qu'elle doit transmettre au centre de gestion CG.

Comme indiqué précédemment, dans un réseau classique, la station de trafic STi qui a besoin de ressources supplémentaires doit adresser une demande de ressources au centre de gestion CG, laquelle ne peut être prise en compte par son mécanisme cyclique d'allocation de ressources qu'au mieux lors du cycle suivant. En ajoutant le délai aller-retour de transmission entre la station de trafic STi et le centre de gestion CG, il peut donc s'écouler plusieurs secondes avant qu'une station de trafic STi dispose des ressources supplémentaires demandées. Or, les données en excès qui doivent être transmises au moyen des ressources supplémentaires ne peuvent être mémorisées temporairement (ou « bufférisées ») pendant un tel délai. Elles peuvent l'être tout au plus pendant quelques dizaines de ms.

L'invention intervient pour remédier à cet inconvénient.

Comme indiqué précédemment, chaque compresseur/décompresseur CD comprend un premier module de traitement MT1 chargé d'intervenir chaque fois que sa station de trafic STi a besoin de ressources supplémentaires pour augmenter le trafic utile (compressé) qu'elle doit transmettre au centre de gestion CG et qui est issu de la station de base BTS.

Plus précisément, lorsque survient la situation précitée, le premier module de traitement MT1 commence de préférence par lisser dans le temps les trames qui peuvent l'être (trames de signalisation et trames de données), ce qui fournit un trafic utile lissé (compressé). Puis, il adjoint un premier trafic TL, dit trafic de lissage, au trafic utile lissé, afin de lisser les creux entre les pointes de trafic. On obtient ainsi en permanence un flux agrégé dont les caractéristiques varient lentement, de façon compatible avec le temps de réaction de la boucle d'allocation de ressources (DAMA). Ce flux agrégé est appelé trafic lissé TL'.

Ce processus de lissage intègre la marge choisie (définie par le centre de gestion CG comme indiqué précédemment), qui sert à anticiper les variations potentielles du flux compressé dans le temps de réaction de la boucle d'allocation de ressources.

Ensuite, le module de traitement MT adjoint au trafic lissé TL' (trafic utile TU, augmenté du premier trafic (ou trafic de lissage) TL), un second trafic TA, dit trafic anticipatif, représentatif d'une anticipation du besoin de ressources supplémentaires et destiné à solliciter implicitement le centre de gestion CG.

On a représenté schématiquement sur la figure 4 un exemple de courbe d'évolution en fonction du temps (t) de la capacité (ou des ressources de transmission) utilisée(s) (CU) par une station de trafic STi respectivement pour le trafic utile (TU), le trafic de lissage (TL), le trafic lissé (TL'), et le trafic anticipatif (TA).

Le trafic utile TU, augmenté du premier trafic (ou trafic de lissage) TL et du second trafic (ou trafic anticipatif) TA, est ensuite transmis au modem 8, puis transmis au dispositif d'émission/réception SER' afin qu'il le transmette sur la liaison Li au centre de gestion CG, via le satellite SAT.

La station de trafic STi surveille alors le trafic qui provient du centre de gestion CG afin de déterminer s'il lui a alloué des ressources supplémentaires, et si c'est le cas elle accepte d'effectuer une augmentation du trafic utile correspondant au plus à la somme des ressources qui correspondent au premier trafic (marge initiale) et des ressources supplémentaires allouées. En d'autres termes, la station de trafic STi accepte l'établissement de nouveaux canaux de trafic utile dans les limites de la capacité correspondant aux ressources supplémentaires ainsi allouées.

Il est important de noter que le fait d'adjoindre un trafic anticipatif TA au trafic lissé TL' (TU + TL) permet de signaler au centre de gestion CG qu'une station de trafic STi a besoin de ressources supplémentaires, et donc constitue une demande implicite de réservation de ressources pour ledit centre de gestion CG. Le volume (ou la valeur) du trafic anticipatif TA est par exemple détecté par le module d'évaluation de charge 16 qui est implanté dans chaque compresseur/décompresseur 7 du hub H, et communiqué(e) au module de gestion 13 dudit hub H. Le module de gestion 13 peut alors décider au cycle suivant d'attribuer ou non tout ou partie des ressources supplémentaires demandées implicitement par une station de trafic STi, en fonction du reliquat de capacité disponible pour l'ensemble des voies de retour (ou « return »).

La valeur (ou le volume) du trafic anticipatif TA qui est adjoint au trafic utile TU augmenté du trafic de lissage TL est important(e) car elle représente la quantité de ressources supplémentaires demandée au centre de gestion CG. Pour fixer sa valeur (ou son volume) plusieurs solutions peuvent être envisagées.

Ainsi, le trafic anticipatif TA qui est adjoint au trafic utile TU augmenté du trafic de lissage TL peut être constant. Par exemple, il est égal à un nombre entier N (N>0) de pas d'allocation de ressources du module de gestion 13 du hub H. Par exemple on choisit N = 1, ce qui correspond à un pas d'allocation de ressources du module de gestion 13. On peut également choisir une valeur égale à 16 kbps (étant donné qu'un appel consomme le plus souvent 16 kbps). On peut envisager que la valeur du trafic anticipatif TA soit constante sur des périodes prédéterminées, et qu'elle varie d'une période à une autre en fonction de l'importance du trafic utile habituel au sein de chacune de ces périodes. Dans ce cas, dans une période à faible trafic on peut utiliser un faible trafic anticipatif TA, tandis que dans une période à fort trafic on peut utiliser un fort trafic anticipatif TA, mais sans relation linéaire entre les valeurs des trafics anticipatifs de ces deux périodes.

Dans une première variante, le trafic anticipatif TA peut être en permanence maximal afin de réserver par anticipation pour chaque liaison le maximum de ressources de transmission, dans les limites de la capacité globale disponible pour l'ensemble des voies de retour (ou « return »).

Dans une deuxième variante, le compresseur/décompresseur CD de chaque station de trafic STi peut par exemple identifier en permanence le nombre de canaux utilisés pour des appels de type voix et le nombre de canaux utilisés pour la transmission de données (data). On prévoit en outre une table établissant une correspondance entre le volume de trafic anticipatif TA à établir et les nombres respectifs de canaux de voix et de canaux de données. Cette table est alors utilisée par le premier module de traitement MT1 de chaque compresseur/décompresseur CD pour déterminer à chaque instant le volume de trafic anticipatif TA à adjoindre au trafic lissé TL'.

Dans une troisième variante, le trafic anticipatif TA peut prendre en compte des statistiques d'évolutivité de trafic afin de solliciter plus ou moins de ressources supplémentaires en fonction des caractéristiques courantes du trafic (pourcentage de trafic voix, pourcentage de trafic de données (data), pourcentage de signalisation, évolutivité de chaque type de trafic).

Dans ce cas, le premier module de traitement MT1 du compresseur/décompresseur CD mesure à chaque instant la capacité effectivement utilisée dans un intervalle temporel choisi qui vient de s'écouler, par exemple de durée égale à deux secondes (temps de réaction d'une boucle d'allocation de type DAMA), et la compare à celle effectivement utilisée dans l'intervalle temporel précédent. Puis, il détermine l'écart entre ces deux capacités utilisées, lequel correspond à des variations de trafic utile compressé égales par exemple +8 kbps, +16 kbps, +24 kbps, +32 kbps, et ainsi de suite.

Le premier module de traitement MT1 construit avec ces écarts un histogramme sur une fenêtre glissante, par exemple d'une durée de quinze minutes (le trafic évolue en effet fortement au cours d'une journée, mais il est fortement corrélé au sein de tranches temporelles d'environ quinze minutes). Cet histogramme caractérise alors le nombre de fois où au cours des quinze dernières minutes l'écart a été de 8 kbps, +16 kbps, +24 kbps, +32 kbps, par exemple.

Sur la base de cet histogramme, le premier module de traitement MT1 du compresseur/décompresseur CD détermine le volume de trafic anticipatif qui représente le pire cas constaté à la fin de l'intervalle temporel choisi (par exemple d'une durée de 2 s), au cours des quinze minutes (fenêtre glissante) qui viennent de s'écouler. Par exemple si le pire cas constaté correspond à + 96 kbps par rapport au trafic lissé courant, alors le premier module de traitement MT1 fixe le trafic anticipatif TA à une valeur égale à 96 kbps.

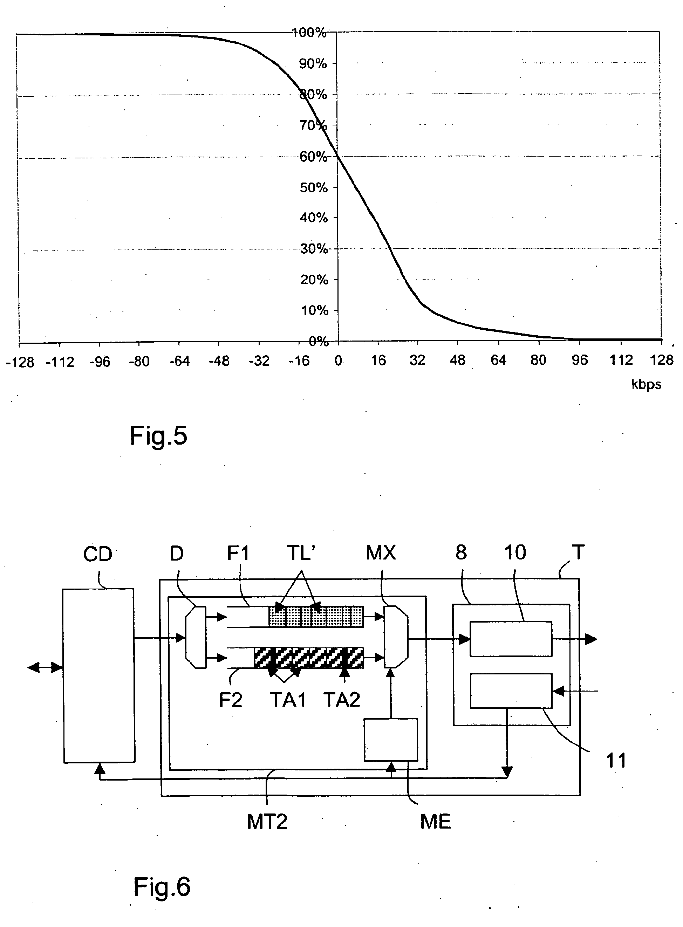

On a représenté sur la figure 5 un exemple d'histogramme cumulé de variations de trafic utile TU en kbps. Dans cet exemple, dans 60% des cas la variation en deux secondes est inférieure ou égale à 0 kbps, dans 40% des cas elle est inférieure ou égale à +16 kbps, et dans 1% des cas elle est inférieure ou égale à +80 kbps. Cela signifie qu'avec un trafic anticipatif TA égal à +80 kbps, 99% des cas sont couverts. Pour couvrir tous les cas, le trafic anticipatif TA doit alors être fixé à +96 kbps.

Le trafic anticipatif TA est préférentiellement constitué en quasi totalité de trames de bourrage TA1. Plus précisément, il est préférentiellement constitué de trames de bourrage TA1 et de trames témoin TA2, ces dernières étant intercalées périodiquement entre des séquences de trames de bourrage TA1. Par exemple, on place une trame témoin TA2 toutes les 100 ms.

Par ailleurs, le trafic anticipatif TA est préférentiellement affecté d'un degré de priorité inférieur à celui qui est affecté au trafic utile TU (augmenté du trafic de lissage TL) à transmettre. Ainsi, on peut envisager un mode de fonctionnement dans lequel on ne transmet du trafic anticipatif TA qu'à condition qu'il n'y ait pas de trafic utile TU en attente de transmission. Ce mode de fonctionnement est appelé en anglais « best effort » (« au mieux »). Dans une variante, le module de traitement MT peut multiplexer des trames du trafic anticipatif TA avec les trames du trafic utile TU, selon des proportions choisies. Ce mode de fonctionnement est appelé en anglais « Weighted Fair Queueing » (« mise en file d'attente pondérée »).

Pour mettre en oeuvre le fonctionnement de type best effort ou de type Weighted Fair Queueing, on peut par exemple utiliser un second module de traitement MT2. Ce dernier est préférentiellement implanté dans le terminal T de chaque station de trafic STi, comme cela est schématiquement et fonctionnellement illustré sur la figure 6.

Dans cet exemple de réalisation, le second module de traitement MT2 comprend tout d'abord un démultiplexeur DM chargé d'orienter vers des première F1 et seconde F2 mémoires, par exemple de type FIFO (« First In First Out » - premier entré premier sorti), respectivement les trames du trafic lissé TL' (trafic utile TU + trafic de lissage TL) et les trames du trafic anticipatif TA (trames de bourrage TA1 et trames témoin TA2) délivrées par le second module de traitement MT2 du compresseur/décompresseur CD.

Le second module de traitement MT2 comprend également un module d'extraction ME chargé d'extraire du trafic reçu par sa station de trafic STi, et provenant du centre de gestion CG, des informations d'allocation de ressources fixant le nombre de ressources utilisables par cycle d'allocation et la position temporelle des ressources allouées.

Enfin, le second module de traitement MT2 comprend un multiplexeur MX piloté par le module d'extraction ME en fonction des informations d'allocation de ressources et chargé de délivrer sur sa sortie (couplée au modulateur 10 du modem 8) les trames stockées temporairement dans les files d'attente des première F1 et seconde F2 mémoires. Ce multiplexeur MX peut fonctionner soit en mode best effort, soit en mode Weighted Fair Queueing.

Dans l'exemple de réalisation décrit ci-avant, le second module de traitement MT2 ne comprend que deux mémoires pour stocker temporairement les trames du trafic utile TU (éventuellement lissé TL') et les trames du trafic anticipatif TA (TA1 et TA2). Mais, le second module de traitement MT2 peut comprendre plus de deux mémoires. En fait, il doit en comprendre au moins deux et peut en comprendre quasiment autant qu'il y a de types de trame ou flux différents à transmettre.

A titre d'exemple illustratif, on peut envisager d'utiliser huit mémoires associées chacune à huit niveaux de priorité différents : un premier niveau de priorité (le plus élevé) pour les trames de signalisation hors trames de mesure (car elles constituent un volume très important en mode return ou uplink (montant), et leur acheminement présente un caractère moins critique en terme de délai), un deuxième niveau (inférieur au précédent) pour les trames de voix, un troisième niveau (inférieur au précédent) pour les trames de bruit de confort, un quatrième niveau (inférieur au précédent) pour les trames de données (data), un cinquième niveau (inférieur au précédent) pour les trames de signalisation non prioritaires (par exemple les trames de mesure), un sixième niveau (inférieur au précédent) pour les flux auxiliaires (par exemple le trafic multiplexé utilisant les reliquats de bande passante), un septième niveau (inférieur au précédent) pour les trames de bourrage TL utilisées pour le lissage du trafic utile TU présent dans l'un des niveaux de priorité supérieurs, et un huitième niveau (inférieur au précédent et le moins élevé) pour les trames de bourrage TA1 et les trames témoin TA2 du trafic anticipatif TA.

Dans ce cas, le démultiplexeur DM aiguille chaque type de trame ou flux, délivré par le premier module de traitement MT1 du compresseur/décompresseur CD, vers la mémoire qui lui est associée, et le multiplexeur MX multiplexe les trames (ou flux) stockées dans les mémoires en fonction du mode de fonctionnement choisi (best effort ou Weighted Fair Queueing) et des instructions transmises par le module d'extraction ME et définies dans la table d'allocation de ressources.

En raison de la priorité la plus faible affectée au trafic anticipatif TA (TA1 et TA2), si les ressources allouées par le module de gestion 13 du centre de gestion CG sont insuffisantes par rapport aux besoins effectifs pour le trafic lissé TL' plus le trafic anticipatif TA, c'est le trafic anticipatif TA qui est affecté. Cela se traduit par des délais d'acheminement croissants et des pertes de trames de bourrage TA1 et/ou de trames témoin TA2. On se sert alors de cet effet pour détecter une congestion de trafic anticipatif sur une liaison de transmission Li. Plusieurs solutions, reposant sur l'utilisation d'un trafic anticipatif TA constitué de trames de bourrage TA1 et de trames témoin TA2 régulièrement réparties (par exemple une trame témoin TA2 toutes les 100 ms), peuvent être envisagées pour détecter ces congestions.

Une première solution consiste à agencer chaque compresseur/décompresseur 7 du hub H de sorte qu'il détecte en permanence (par exemple au moyen de son module d'évaluation de charge 16) la présence des trames témoin TA2 afin de déterminer leurs instants de réception et de déduire de ces derniers l'intervalle de temps qui sépare les instants de réception des trames témoin TA2 successives provenant de la station de trafic STi qui lui est associée. Chaque compresseur/décompresseur 7 est également chargé de comparer chaque intervalle de temps à un seuil choisi, afin de transmettre à la station de trafic STi qui lui est associée un signal d'alerte lorsque la durée d'un intervalle de temps est supérieure au seuil choisi. Ce signal d'alerte est destiné à signaler à la station de trafic STi destinataire l'absence d'une trame témoin.

Par exemple, le signal d'alerte peut être un simple signal binaire. Mais, en variante, il peut s'agir d'une valeur numérique représentative de la durée de l'intervalle de temps.

Dans ce cas, chaque station de trafic STi détecte (par exemple au moyen de son premier module de traitement MT1) la congestion du (second) trafic anticipatif TA, représentative de ressources de transmission insuffisantes, lorsqu'elle reçoit un signal d'alerte en provenance du centre de gestion CG.

Une deuxième solution requiert la numérotation de chaque trame témoin TA2. Dans ce cas, chaque compresseur/ décompresseur 7 du hub H est chargé en permanence (par exemple au moyen de son module d'évaluation de charge 16) de détecter la présence des trames témoin TA2 afin de déterminer le numéro qui leur est associé. Il peut ainsi détecter chaque rupture de numérotation entre trames témoin TA2 transmises par la station de trafic STi qui lui est associée, et transmettre à cette station de trafic STi un signal d'alerte lorsqu'il détecte une telle rupture (non réception d'au moins une trame témoin).

Comme dans la première solution, le signal d'alerte peut être un simple signal binaire. Mais, en variante, il peut s'agir d'une valeur numérique représentative du nombre de trames témoin non reçues.

Dans ce cas, chaque station de trafic STi détecte (par exemple au moyen de son premier module de traitement MT1) la congestion du (second) trafic anticipatif TA, représentative de ressources de transmission insuffisantes, lorsqu'elle reçoit un signal d'alerte en provenance du centre de gestion CG.

On notera que les première et deuxième solutions peuvent être combinées. Dans ce cas, le signal d'alerte peut par exemple comporter une valeur numérique représentative de la durée de l'intervalle de temps et/ou du nombre de trames témoin non reçues

Une troisième solution requiert l'adjonction d'un marqueur temporel à chaque trame témoin TA2 par exemple avec chaque premier module de traitement MT1. Ce marqueur temporel représente l'horaire de création de la trame témoin TA2, synchronisé par rapport à une horloge du centre de gestion CG. Dans ce cas, chaque compresseur/décompresseur 7 du hub H est chargé en permanence (par exemple au moyen de son module d'évaluation de charge 16) de détecter la présence des trames témoin TA2 afin de dater leur instant de réception, puis de déterminer la durée de transmission de chaque trame témoin TA2 à partir de son horaire de création et de son instant de réception.

La durée de transmission d'une trame témoin TA2 est sensiblement égale à la somme de son délai de traitement au niveau terminal T, de son délai de transmission (qui est quasi invariant), du délai de traitement (quasi invariant) introduit par le démodulateur 5 du hub H qui est associé à la station de trafic STi qui l'a transmis, et du délai introduit par la matrice de commutation située entre le démodulateur 5 et le compresseur/décompresseur 7 correspondant, lequel est faible, voire négligeable si la matrice de commutation est surdimensionnée. Par conséquent, chaque variation de durée de transmission caractérise essentiellement une variation de délai de traitement au niveau terminal T qui résulte d'un sous-dimensionnement éventuel des ressources de transmission.

Chaque compresseur/décompresseur 7 peut donc transmettre un signal d'alerte à la station de trafic STi qui lui est associée chaque fois qu'il détecte une variation de durée de transmission d'une trame témoin TA2 qu'elle a transmise.

Comme dans les première et deuxième solutions, le signal d'alerte peut être un simple signal binaire. Mais, en variante, il peut s'agir d'une valeur numérique représentative de l'amplitude de la variation de durée de transmission détectée.

Dans ce cas, chaque station de trafic STi détecte (par exemple au moyen de son premier module de traitement MT1) la congestion du (second) trafic anticipatif TA, représentative de ressources de transmission insuffisantes, lorsqu'elle reçoit un signal d'alerte en provenance du centre de gestion CG.

Une quatrième solution consiste à agencer chaque compresseur/décompresseur 7 du hub H de sorte qu'il détecte en permanence (par exemple au moyen de son module d'évaluation 16 ou de sa matrice de commutation) les trames témoin TA2 afin de les renvoyer vers la station de trafic STi qui lui est associée et qui les transmet.

Dans ce cas, chaque station de trafic STi peut par exemple détecter (par exemple au moyen de son premier module de traitement MT1) l'arrivée de chaque trame témoin TA2 renvoyée et son instant de réception, puis déduire de ce dernier le temps qu'il a mis pour revenir auprès d'elle. On peut par exemple utiliser le compresseur/décompresseur CD pour extraire les trames témoin TA2 du trafic provenant du centre de gestion CG et pour déterminer le temps d'aller/retour de chaque trame témoin TA2 extraite et comparer (par exemple au moyen de son premier module de traitement MT1) ce temps d'aller/retour à un seuil choisi.

Ainsi, lorsqu'un temps d'aller/retour est supérieur au seuil choisi (ou en l'absence de réception d'une trame témoin TA2), la station de trafic STi en déduit qu'il y a une congestion du (second) trafic anticipatif TA, représentative de ressources de transmission insuffisantes.

Il est préférable de détecter au niveau du centre de gestion CG chaque perte de trame témoin TA2 due à un affaiblissement en réception ou à une dégradation de la liaison de transmission Li concernée (provoquée par exemple par des interférences).

Cette tâche incombe de préférence à chaque démodulateur 5 du modem 1 du hub H. Dans ce cas, chaque démodulateur 5 adresse au compresseur/décompresseur 7 correspondant une information (ou indicateur) signalant une altération de la réception ou une réception de trame erronée. Cette information (ou indicateur) est ensuite renvoyé(e) par le compresseur/décompresseur 7 du hub H au compresseur/décompresseur CD de la station de trafic STi qui lui est associée. Cette information signale alors à la station de trafic STi qu'aucune décision ne peut être prise en ce qui concerne la trame témoin TA2 manquante.

Il est rappelé que les mécanismes de détection de congestion décrits ci-avant ne concernent que la congestion anticipative, c'est-à-dire relative au trafic anticipatif TA (ainsi qu'occasionnellement la marge TL utilisée dans le processus de lissage du trafic utile TU). Elle n'a donc pas d'impact sur le trafic utile TU.

Par ailleurs, ces mécanismes de détection de congestion sont destinés à permettre à chaque station de trafic STi d'estimer la quantité de ressources de transmission (ou capacité) qui lui a été allouée par le centre de gestion CG au cours du dernier cycle d'allocation. Grâce à cette détermination, chaque station de trafic STi connaît approximativement les ressources dont elle dispose, sans avoir besoin d'échanger des messages de signalisation avec le centre de gestion CG.

Ces mécanismes peuvent être complétés par des mécanismes de régulation du trafic anticipatif TA afin de permettre à chaque station de trafic STi de déterminer précisément, et non approximativement, les ressources qui lui ont été allouées par le centre de gestion CG. Plusieurs mécanismes de régulation du trafic anticipatif TA peuvent être envisagés. Ces derniers ne dépendent pas des mécanismes de détection de congestion utilisés en parallèle.

Une première solution consiste à agencer chaque station de trafic STi de sorte que le premier module de traitement MT1 de son compresseur/décompresseur CD maintienne le flux de trafic anticipatif TA présent juste avant détection de la congestion du (second) trafic anticipatif TA par absence d'une ou plusieurs trames témoin TA2 ou par occurrence d'un écart temporel anormal entre deux réceptions de trames témoin TA2. Dans ce cas, chaque station de trafic STi identifie les ressources allouées aux ressources TL'+TA qui étaient disponibles avant la détection de congestion du trafic anticipatif TA.

Une deuxième solution consiste à agencer chaque station de trafic STi de sorte que chaque fois que le premier module de traitement MT1 de son compresseur/décompresseur CD détecte une congestion du (second) trafic anticipatif TA il réduise progressivement le volume du trafic anticipatif TA jusqu'à ce que la congestion du trafic anticipatif TA disparaisse. Dans ce cas, chaque station de trafic STi identifie les ressources allouées aux ressources TL'+TA disponibles au moment de la disparition de la congestion du trafic anticipatif TA.

Une troisième solution consiste à agencer chaque station de trafic STi de sorte que chaque fois que le premier module de traitement MT1 de son compresseur/décompresseur CD ne détecte pas de congestion du (second) trafic anticipatif TA il augmente progressivement le second trafic jusqu'à ce qu'il détecte une congestion du trafic anticipatif TA qui signale que l'on a atteint la limite de capacité (ou ressources) disponible(s). Dans ce cas, chaque station de trafic STi identifie les ressources allouées aux ressources TL'+TA qui étaient disponibles avant la détection de congestion du trafic anticipatif TA.

Une quatrième solution requiert l'utilisation de signaux d'alerte constitués d'une valeur numérique représentative de la durée séparant les instants de réception de trames témoin successives. Elle consiste à agencer chaque station de trafic STi de sorte que le premier module de traitement MT1 de son compresseur/décompresseur CD module le (second) trafic anticipatif TA par une valeur dépendant de la différence entre la valeur numérique courante du signal d'alerte reçu et la valeur moyenne de cette valeur numérique. Cette valeur de modulation est par exemple égale au résultat de la différence précitée. Le trafic anticipatif TA est alors modifié en fonction du résultat de la différence, selon les cas mentionnés ci-dessous :
- si la différence est positive et élevée, cas significatif d'une aggravation de congestion, le trafic anticipatif TA est fortement réduit, afin de sortir rapidement de cette situation de congestion ;
- si la différence est positive mais faible, cas significatif d'un début de congestion, le trafic TA est légèrement réduit ;
- si la différence est nulle, le trafic TA est maintenu à sa valeur courante, ce qui est le cas lorsque le trafic anticipatif TA a correctement convergé vers la quantité effective de ressources allouées ;
- à l'opposé, tant que la différence est négative, le trafic TA peut être augmenté.

Cette solution permet de faire converger précisément le trafic anticipatif TA avec la valeur courante de ressources allouées, et donc de déterminer le volume de ressources de transmission allouées sans nécessiter d'échange entre la station distante STi et le centre de gestion CG.

L'exploitation du résultat de la différence précitée permet d'éviter tout effet oscillatoire dans la boucle de régulation du trafic anticipatif TA qui est ainsi constituée.

Dans ce cas, chaque station de trafic STi identifie les ressources allouées aux ressources TL'+TA qui sont disponibles lorsque la différence entre la valeur numérique courante du signal d'alerte et la moyenne de cette valeur est nulle ou proche de 0, ou bien par extension aux ressources TL'+TA utilisées, corrigées au pro-rata de la différence précitée. Les techniques de lissage classiques utilisées dans les boucles de régulation permettent d'éviter tout effet d'oscillation du mécanisme ainsi constitué, et d'obtenir ainsi une valeur assez précise des ressources allouées par moyennage des ressources utilisées globalement pour le trafic TL'+TA.

Quelle que soit la technique utilisée par une station de trafic STi pour déterminer les ressources qui lui ont été effectivement allouées, chaque fois qu'elle détecte une inadaptation des ressources allouées à ses besoins de transmission de trafic utile TU, le premier module de traitement MT1 de son compresseur/décompresseur CD est agencé de manière à supprimer des trames présentes sur les canaux (de sa liaison Li) qui ne présentaient pas d'activité avant l'instant d'apparition de la congestion (et donc de l'inadaptation). Par exemple, si le canal concerné est un canal de voix ou de données, la communication en train de s'établir est rejetée au niveau réseau. Ce problème de suppression est préférentiellement traité canal de communication par canal de communication.

Dans ce qui précède on a décrit une mise en oeuvre de l'invention pour la transmission de trafic des stations de trafic STi vers le centre de gestion CG. Mais, l'invention s'applique de la même façon à la transmission de trafic du centre de gestion CG vers les stations de trafic STi. L'intérêt est cependant plus limité dans ce sens, car le couplage entre les compresseurs/décompresseurs 7 et le module de gestion 13 du hub H, situés sur le même site, ne pose généralement aucun problème pour exprimer les besoins en ressources de transmission et connaître en retour les allocations effectives de ressources, et donc réguler le flux. Dans ce cas, les aménagements apportés aux stations de trafic STi et décrites ci-avant doivent être transposées dans le centre de gestion CG, et inversement, les aménagements apportés au centre de gestion CG et décrites ci-avant doivent être transposées dans les stations de trafic STi.

Les moyens de compression/décompression 6 du hub H et les premier MT1 et second MT2 modules de traitement des stations de trafic STi peuvent être réalisés sous la forme de circuits électroniques, de modules logiciels (ou informatiques), ou d'une combinaison de circuits et de logiciels.

L'invention offre un certain nombre d'avantages, et notamment :
- elle évite un couplage direct entre les moyens de compression/décompression des stations de trafic et le module de gestion (de type DAMA ou dérivé) du centre de gestion,
- elle permet de gérer efficacement la régulation de charge dans des réseaux hétérogènes où un partage de ressources est établi en plusieurs endroits (par exemple sur un lien satellite puis sur un lien terrestre),
- elle permet d'accroître l'efficacité du mécanisme d'allocation de ressources par répartition (de type DAMA ou dérivé), en adaptant la marge mise en place dans les allocations de ressources aux caractéristiques courantes du trafic transporté.

L'invention ne se limite pas aux modes de réalisation de hub, de centre de gestion, de terminal de transmission, de moyens de compression/décompression, et de station de trafic décrits ci-avant, seulement à titre d'exemple, mais elle englobe toutes les variantes que pourra envisager l'homme de l'art dans le cadre des revendications ci-après.

Ainsi, on a décrit l'invention dans une application à la transmission de type TDMA. Mais l'invention s'applique également à la transmission de type SCPC, FDMA, CDMA, voire tout autre type de transmission reposant sur un partage dynamique des ressources de transmission.

Par ailleurs, l'invention s'applique aux équipements de compression/décompression opérant sur des signaux avant compression, portés par des trames ou des paquets, ou par des circuits.

## Revendications

1. Procédé de réservation de ressources dans un réseau de communication de type point ou multipoint à multipoint dans lequel ont été établies des liaisons radio (Li) entre des stations de trafic distantes (STi) et un centre de gestion (CG), lesdites liaisons (Li) partageant des ressources allouées dynamiquement par ledit centre de gestion (CG), **caractérisé en ce qu'**il consiste, en cas de besoin de ressources supplémentaires dans une station de trafic pour augmenter un trafic utile à transmettre audit centre de gestion, à adjoindre à ce trafic utile un premier trafic représentatif d'une marge choisie et un second trafic représentatif d'une anticipation dudit besoin de ressources supplémentaires, de manière à solliciter implicitement ledit centre de gestion (CG), puis à déterminer dans ladite station de trafic (STi) si des ressources supplémentaires ont été allouées par ledit centre de gestion (CG), et en cas d'allocation de ressources supplémentaires, à procéder à une augmentation du trafic utile correspondant au plus à la somme des ressources correspondant au premier trafic et desdites ressources supplémentaires allouées, ou si aucune ressource supplémentaire n'a été allouée, à bloquer tout établissement d'un nouveau canal de trafic jusqu'à obtention de ressources supplémentaires.

2. Réseau de communication de type point ou multipoint à multipoint, comprenant au moins un centre de gestion (CG) et des stations de trafic distantes (STi) entre lesquels ont été établies des liaisons radio (Li) partageant des ressources allouées dynamiquement par ledit centre de gestion (CG), **caractérisé en ce que** chaque station de trafic (STi) est agencée, en cas de besoin de ressources supplémentaires pour augmenter le trafic utile qu'elle doit transmettre audit centre de gestion (CG), pour adjoindre au trafic utile en cours un premier trafic représentatif d'une marge choisie et un second trafic représentatif d'une anticipation dudit besoin de ressources supplémentaires, de manière à solliciter implicitement ledit centre de gestion (CG), puis pour déterminer si lesdites ressources supplémentaires ont été allouées par ledit centre de gestion (CG), et en cas d'allocation de ressources supplémentaires, à procéder à une augmentation du trafic utile correspondant au plus à la somme des ressources correspondant audit premier trafic et des ressources supplémentaires allouées.

3. Réseau selon la revendication 2, **caractérisé en ce que** chaque station de trafic (STi) est agencée pour adjoindre à son trafic utile augmenté dudit premier trafic un second trafic correspondant à un nombre entier N de pas d'allocation de ressources par ledit centre de gestion (CG),avec N >0.

4. Réseau selon l'une des revendications 2 et 3, **caractérisé en ce que** chaque station de trafic (STi) est agencée pour adjoindre à son trafic utile augmenté dudit premier trafic un second trafic constant.

5. Réseau selon l'une des revendications 2 et 3, **caractérisé en ce que** chaque station de trafic (STi) est agencée pour adjoindre à son trafic utile augmenté dudit premier trafic un second trafic variable en fonction de statistiques locales d'évolution temporelle de son trafic utile.

6. Réseau selon l'une des revendications 2 et 3, **caractérisé en ce que** chaque station de trafic (STi) est agencée pour adjoindre à son trafic utile augmenté dudit premier trafic un second trafic variable en fonction des nombres respectifs de canaux de transmission utilisés par son trafic utile pour transmettre des trames de types différents.

7. Réseau selon l'une des revendications 2 à 6, **caractérisé en ce que** chaque station de trafic (STi) est agencée pour affecter un niveau de priorité au second trafic et au moins un niveau de priorité, supérieur à celui dudit second trafic, à son trafic utile.

8. Réseau selon la revendication 7, **caractérisé en ce que** chaque station de trafic (STi) est agencée pour affecter au premier trafic un niveau de priorité compris entre ceux des second trafic et trafic utile.

9. Réseau selon l'une des revendications 2 à 8, **caractérisé en ce que** chaque station de trafic (STi) est agencée pour transmettre ledit second trafic en l'absence de trafic utile en attente de transmission.

10. Réseau selon l'une des revendications 2 à 8, **caractérisé en ce que** chaque station de trafic (STi) est agencée pour multiplexer des trames constituant ledit second trafic avec les trames constituant ledit trafic utile augmenté dudit premier trafic, en attente de transmission, selon une proportion choisie.

11. Réseau selon l'une des revendications 2 à 10, **caractérisé en ce que** chaque station de trafic (STi) est agencée pour adjoindre à son trafic utile augmenté dudit premier trafic un second trafic constitué de trames de bourrage et de trames témoin.

12. Réseau selon la revendication 11, **caractérisé en ce que** ledit centre de gestion (CG) est agencé pour renvoyer chaque trame témoin reçue vers la station de trafic (STi) qui l'a transmise, et **en ce que** chaque station de trafic (STi) est agencée pour déterminer le temps mis par chaque trame témoin pour revenir auprès d'elle et pour détecter une congestion du second trafic lorsque ledit temps est supérieur à un seuil choisi.

13. Réseau selon la revendication 11, **caractérisé en ce que** ledit centre de gestion (CG) est agencé pour détecter les instants de réception desdites trames témoin, pour déterminer un intervalle de temps séparant les instants de réception de trames témoin successives provenant de chaque station de trafic (STi), et pour transmettre à une station de trafic (STi) un signal d'alerte lorsque la durée séparant les instants de réception de trames témoin successives qu'elle a transmises est supérieure à un seuil choisi, et **en ce que** chaque station de trafic (STi) est agencée pour détecter une congestion du second trafic en cas de réception d'un signal d'alerte en provenance dudit centre de gestion (CG).

14. Réseau selon l'une des revendications 11 et 13, **caractérisé en ce que** chaque station de trafic (STi) est agencée pour transmettre des trames témoin numérotées, **en ce que** ledit centre de gestion (CG) est agencé pour détecter le numéro associé à chaque trame témoin transmise par chaque station de trafic (STi), et pour transmettre à une station de trafic (STi) un signal d'alerte en cas de non réception d'au moins l'une des trames témoin qu'elle a successivement transmises, et **en ce que** chaque station de trafic (STi) est agencée pour détecter une congestion du second trafic en cas de réception d'un signal d'alerte en provenance dudit centre de gestion (CG).

15. Réseau selon la revendication 11, **caractérisé en ce que** chaque station de trafic (STi) est agencée pour transmettre des trames témoin munies d'un marqueur temporel représentatif d'un horaire de création synchronisé par rapport à une horloge dudit centre de gestion (CG), **en ce que** ledit centre de gestion (CG) est agencé pour dater l'instant de réception de chaque trame témoin transmise par chaque station de trafic (STi), pour déterminer la durée de transmission de chaque trame témoin à partir de son horaire de création et de son instant de réception, et pour transmettre à une station de trafic (STi) un signal d'alerte en cas de détection d'une variation de durée de transmission d'une trame témoin qu'elle a transmise, et **en ce que** chaque station de trafic (STi) est agencée pour détecter une congestion du second trafic en cas de réception d'un signal d'alerte en provenance dudit centre de gestion (CG).

16. Réseau selon l'une des revendications 13 à 15, **caractérisé en ce que** ledit centre de gestion (CG) est agencé pour transmettre des signaux d'alerte constitués d'un indicateur binaire.

17. Réseau selon l'une des revendications 13 et 14, **caractérisé en ce que** ledit centre de gestion (CG) est agencé pour transmettre des signaux d'alerte constitués d'une valeur numérique représentative d'une durée déterminée lorsque celle-ci est supérieure audit seuil et/ou du nombre de trames témoin non reçues.

18. Réseau selon la revendication 15, **caractérisé en ce que** ledit centre de gestion (CG) est agencé pour transmettre des signaux d'alerte constitués d'une valeur numérique représentative de l'amplitude d'une variation de durée de transmission détectée.

19. Réseau selon l'une des revendications 13 à 18, **caractérisé en ce que** ledit centre de gestion (CG) est agencé pour détecter chaque affaiblissement de réception de trafic et chaque dégradation de liaison (Li), et, en cas de non réception de trame(s) témoin en provenance d'une station de trafic (STi) pendant une durée supérieure à un seuil choisi, pour transmettre à cette station de trafic (STi) un signal d'avertissement signalant une impossibilité de prise de décision.

20. Réseau selon l'une des revendications 12 à 19, **caractérisé en ce que** chaque station de trafic (STi) est agencée, en cas de détection d'une congestion du second trafic, pour maintenir l'adjonction du second trafic et pour considérer comme ressources allouées les ressources qui étaient disponibles avant ladite détection de congestion du second trafic.

21. Réseau selon l'une des revendications 12 à 19, **caractérisé en ce que** chaque station de trafic (STi) est agencée, en cas de détection d'une congestion du second trafic, pour réduire progressivement ledit second trafic jusqu'à disparition de ladite congestion du second trafic, et pour considérer comme ressources allouées les ressources disponibles au moment de ladite disparition.

22. Réseau selon l'une des revendications 12 à 19, **caractérisé en ce que** chaque station de trafic (STi) est agencée, en cas d'absence de congestion du second trafic, pour augmenter progressivement ledit second trafic jusqu'à détection d'une congestion du second trafic, et pour considérer comme ressources allouées les ressources qui étaient disponibles avant ladite détection de congestion du second trafic.

23. Réseau selon la revendication 17, **caractérisé en ce qu'**en présence de signaux d'alerte constitués d'une valeur numérique représentative d'une durée séparant les instants de réception de trames témoin successives, chaque station de trafic (STi) est agencée pour moduler ledit second trafic par une valeur fonction de la différence entre la valeur numérique du signal d'alerte reçu et une valeur moyenne de ladite valeur numérique.

24. Réseau selon l'une des revendications 20 à 23, **caractérisé en ce que** chaque station de trafic (STi) est agencée, en cas de détection d'une insuffisance des ressources qui lui ont été allouées, pour supprimer des trames sur des canaux de transmission de sa liaison (Li) qui étaient sans activité avant ladite détection.

## Claims

1. A method for reserving resources within a point-to-multipoint or multipoint-to-multipoint communication network, in which radio links (Li) have been established between remote traffic stations (TSi) and a management center (MC), said links (Li) sharing resources dynamically allocated by said management center (MC), **characterized in that** it consists, when additional resources are needed within a traffic station to increase the useful traffic to be transmitted to said management center (MC), of attaching to this useful traffic a first traffic representative of a selected margin, and a second traffic representative of an anticipation of said need for additional resources, in such a way as to implicitly solicit said management center (MC), then to determine within said traffic station (TSi) whether the additional resources were allocated by the management center (MC), and if additional resources were allocated, to increase the useful traffic by an amount that corresponds as much as possible to the sum of the resources corresponding to the first traffic and said allocated additional resources, or if no additional resources were allocated, to block any establishment of a new traffic channel until additional resources are obtained.

2. A point-to-multipoint or multipoint-to-multipoint communication network, comprising at least one management center (MC) and remote traffic stations (TSi) between which radio links (Li) were established sharing resources dynamically allocated by said management center (MC), **characterized in that** each traffic station (TSi) is configured, when additional resources are needed to increase the useful traffic that it must transmit to the management center (MC), to add to the current useful traffic a first traffic representative of a selected margin and a second traffic representative of an anticipation of said need for additional resources, in such a way as to implicitly solicit said management center (MC), then to determine whether said additional resources were allocated by said management center (MC), and if additional resources were allocated, to increase the useful traffic by an amount that corresponds as much as possible to the sum of the resources corresponding to the first traffic and said allocated additional resources.

3. A network according to claim 2, **characterized in that** each traffic station (TSi) is configured to add to its useful traffic augmented by said first traffic a second traffic corresponding to an integer N of resource allocation steps by said management center (MC), with N>0.

4. A network according to claims 2 and 3, **characterized in that** each traffic station (TSi) is configured to add to its useful traffic augmented by said first traffic a constant second traffic.

5. A network according to claims 2 and 3, **characterized in that** each traffic station (TSi) is configured to add to its useful traffic augmented by said first traffic a second traffic that varies depending on local statistics of the change in its useful traffic over time.

6. A network according to one of the claims 2 and 3, **characterized in that** each traffic station (TSi) is configured to add to its useful traffic augmented by said first traffic a second traffic that varies depending on the respective numbers transmission channels used by its useful traffic to transmit frames of different types.

7. A network according to one of the claims 2 to 6, **characterized in that** each traffic station (TSi) is configured to assign a priority level to the second traffic, and at least one priority level, greater than that of said second traffic, to its useful traffic.

8. A network according to claim 7, **characterized in that** each traffic station (TSi) is configured to assign the first traffic a priority level between those of the second traffic and the useful traffic.

9. A network according to one of the claims 2 to 8, **characterized in that** each traffic station (TSi) is configured to transmit said second traffic in the absence of useful traffic waiting to be transmitted.

10. A network according to one of the claims 2 to 8, **characterized in that** each traffic station (TSi) is configured to multiplex the frames that make up said second traffic with the frames that make up said useful traffic augmented by said first traffic, waiting to be transmitted, based on a selected proportion.

11. A network according to one of the claims 2 to 10, **characterized in that** each traffic station (TSi) is configured to add to its useful traffic augmented with said first traffic a second traffic made up of filler frames and check frames.

12. A network according to claim 11, **characterized in that** said management center (MC) is configured to send each check frame received back to the traffic station (TSi) that transmitted it, and **in that** each traffic station (TSi) is configured to determine the time taken by each check frame to return to it, and to detect a congestion of second traffic whenever said time is greater than a selected threshold.

13. A network according to claim 11, **characterized in that** said management center (MC) is configured to detect the moments when said check frames are received, to determine a time slot separating the moments when successive check frames are received from each traffic station (TSi), and to transmit to a traffic station (TSi) an alert signal whenever the duration separating the moments when successive check frames that it transmitted were received is greater than a selected threshold, and **in that** each traffic station (TSi) is configured to detect a congestion of second traffic in the event that an alert signal is received from said management center (MC).

14. A network according to one of the claims 11 and 13, **characterized in that** each traffic station (TSi) is configured to transmit numbered check frames, and **in that** said management center (MC) is configured to detect the number associated with each check frame transmitted by each traffic station (TSi), and to transmit to a traffic station (TSi) an alert signal if at least one of the check frames that it successively transmitted was not received, and **in that** each traffic station (TSi) is configured to detect a congestion of second traffic if an alert signal is received from said management center (MC).

15. A network according to claim 11, **characterized in that** each traffic station (TSi) is configured to transmit check frames equipped with a time marker representing an time of creation synchronized to a clock in said management center (MC), **in that** said management center (MC) is configured to date the moment when each check frames transmitted by each traffic station (TSi) is received, to determine the transmission duration of each check frame based on its time of creation and the moment it was received, and to transmit an alert signal to a traffic station (TSi) if a variation is detected in the transmission duration of a check frame that it transmitted, and **in that** each traffic station (TSi) is configured to detect a congestion of second traffic if an alert signal is received from said management center (MC).

16. A network according to one of the claims 13 to 15, **characterized in that** said management center (MC) is configured to transmit alert signals made up of a binary indicator.

17. A network according to one of the claims 13 and 14, **characterized in that** said management center (MC) is configured to transmit alert signals made up of a numeric value representative of a determined duration whenever said duration is greater than said threshold and/or is representative of the number of check frames not received.

18. A network according to claim 15, **characterized in that** said management center (MC) is configured to transmit alert signals made up of a numeric transmission value representative of the amplitude of a variation in the detected transmission duration.

19. A network according to one of the claims 13 to 18, **characterized in that** said management center (MC) is configured to detect each weakening of traffic reception and each degradation of a link (Li), and, if one or more check frame(s) are not received from a traffic station (TSi) for a duration greater than a selected threshold, to transmit to said traffic station (TSi) a warning signal notifying it that a decision cannot be made.

20. A network according to one of the claims 12 to 19, **characterized in that** each traffic station (TSi) is configured, whenever a congestion of second traffic is detected, to keep the addition of the second traffic, and to consider the resources which were available prior to said detection of said congestion of second traffic to be allocated resources.

21. A network according to one of the claims 12 to 19, **characterized in that** each traffic station (TSi) is configured, whenever a congestion of second traffic is detected, to gradually reduce said second traffic until said congestion of second traffic disappears, and to consider the resources which were available prior to said disappearance to be allocated resources.

22. A network according to one of the claims 12 to 19, **characterized in that** each traffic station (TSi) is configured, whenever a congestion of second traffic is detected, to gradually increase said second traffic until a congestion of second traffic is detected, and to consider the resources which were available prior to said detection of said congestion of second traffic to be allocated resources.

23. A network according to claim 17, **characterized in that**, in the presence of alert signals made up of a numeric value representative of a duration separating the moments when successive check frames were received, each traffic station (TSi) is configured to modulate said second traffic by a value that varies depending on the difference between the numeric value of the alert signal received and an average value of said numeric value.

24. A network according to one of the claims 20 to 23, **characterized in that** each traffic station (TSi) is configured, whenever it detects an insufficiency in the resources allocated to it, to delete frames on the transmission channels of its link (Li) which were without activity prior to said detection.

## Patentansprüche

1. Verfahren zum Reservieren von Ressourcen in einem Kommunikationsnetzwerk vom Typ Point-to-Multipoint oder Multipoint-to-Multipoint, in welchem Funkverbindungen (Li) zwischen entfernten Verkehrsstationen (STi) und einer Verwaltungszentrale (CG) aufgebaut wurden, wobei die besagten Verbindungen (Li) die von der besagten Verwaltungszentrale (CG) dynamisch zugewiesenen Ressourcen gemeinsam benutzen, **dadurch gekennzeichnet, dass** es im Fall des Bedarfs an zusätzlichen Ressourcen in einer Verkehrsstation, um einen an die besagte Verwaltungszentrale zu übertragenden Nutzverkehr zu erhöhen, darin besteht, diesem Nutzverkehr einen ersten Verkehr, welcher für eine gewählte Reserve repräsentativ ist, und einen zweiten Verkehr, welcher für eine Antizipation des besagten Bedarfs an zusätzlichen Ressourcen repräsentativ ist, hinzuzufügen, um die besagte Verwaltungszentrale (CG) implizit zu beanspruchen, und anschließend in der besagten Verkehrsstation (STi) zu ermitteln, ob zusätzliche Ressourcen durch die besagte Verwaltungszentrale (CG) zugewiesen worden sind, und, wenn zusätzliche Ressourcen zugewiesen worden sind, eine Erhöhung des Nutzverkehrs, welche höchstens der Summe der dem ersten Verkehr entsprechenden Ressourcen und der besagten zugewiesenen zusätzlichen Ressourcen entspricht, vorzunehmen, oder, wenn keine zusätzliche Ressource zugewiesen worden ist, jeden Aufbau eines neuen Verkehrskanals bis zur Verfügungstellung von zusätzlichen Ressourcen zu sperren.

2. Kommunikationsnetzwerk vom Typ Point-to-Multipoint oder Multipoint-to-Multipoint, welches mindestens eine Verwaltungszentrale (CG) und entfernte Verkehrsstationen (STi), zwischen denen Funkverbindungen (Li), welche die dynamisch von der besagten Verwaltungszentrale (CG) zugewiesenen Ressourcen gemeinsam benutzen, aufgebaut worden sind, umfasst, **dadurch gekennzeichnet, dass** jede Verkehrsstation (STi) ausgestaltet ist, um bei Bedarf an zusätzlichen Ressourcen zur Erhöhung des Nutzverkehrs, welchen sie an die besagte Verwaltungszentrale (CG) übertragen soll, dem aktuellen Nutzverkehr einen ersten Verkehr, welcher für eine gewählte Reserve repräsentativ ist, und einen zweiten Verkehr, welcher für eine Antizipation des besagten Bedarfs an zusätzlichen Ressourcen repräsentativ ist, hinzuzufügen, um die besagte Verwaltungszentrale (CG) implizit zu beanspruchen, und anschließend zu ermitteln, ob die besagten zusätzlichen Ressourcen von der besagten Verwaltungszentrale (CG) zugewiesen worden sind, und, wenn zusätzliche Ressourcen zugewiesen worden sind, eine Erhöhung des Nutzverkehrs, welche höchstens der Summe der dem ersten Verkehr entsprechenden Ressourcen und der zugewiesenen zusätzlichen Ressourcen entspricht, vorzunehmen.

3. Netzwerk nach Anspruch 2, **dadurch gekennzeichnet, dass** jede Verkehrsstation (STi) ausgestaltet ist, um ihrem Nutzverkehr, erhöht um den besagten ersten Verkehr, einen zweiten Verkehr hinzuzufügen, welcher einer Ganzzahl N von Ressourcenzuweisungsschritten durch die besagte Verwaltungszentrale (CG) entspricht, wobei N>0.

4. Netzwerk nach einem der Ansprüche 2 und 3, **dadurch gekennzeichnet, dass** jede Verkehrsstation (STi) ausgestaltet ist, um ihrem Nutzverkehr, erhöht um den besagten ersten Verkehr, einen zweiten konstanten Verkehr hinzuzufügen.

5. Netzwerk nach einem der Ansprüche 2 und 3, **dadurch gekennzeichnet, dass** jede Verkehrsstation (STi) ausgestaltet ist, um ihrem Nutzverkehr, erhöht um den besagten ersten Verkehr, einen zweiten Verkehr hinzuzufügen, welcher entsprechend den lokalen Statistiken der zeitlichen Entwicklung ihres Nutzverkehrs variabel ist.

6. Netzwerk nach einem der Ansprüche 2 und 3, **dadurch gekennzeichnet, dass** jede Verkehrsstation (STi) ausgestaltet ist, um ihrem Nutzverkehr, erhöht um den besagten ersten Verkehr, einen zweiten Verkehr hinzuzufügen, welcher entsprechend den jeweiligen Anzahlen der von ihrem Nutzverkehr zur Übertragung von Rahmen unterschiedlicher Typen benutzten Übertragungskanäle variabel ist.

7. Netzwerk nach einem der Ansprüche 2 bis 6, **dadurch gekennzeichnet, dass** jede Verkehrsstation (STi) ausgestaltet ist, um dem zweiten Verkehr eine Prioritätsstufe und ihrem Nutzverkehr mindestens eine Prioritätsstufe, welcher höher als die Prioritätsstufe des besagten zweiten Verkehrs ist, zuzuordnen.

8. Netzwerk nach Anspruch 7, **dadurch gekennzeichnet, dass** jede Verkehrsstation (STi) ausgestaltet ist, um dem ersten Verkehr eine Prioritätsstufe, welche zwischen den Prioritätsstufen des zweiten Verkehrs und des Nutzverkehrs liegt, zuzuordnen.

9. Netzwerk nach einem der Ansprüche 2 bis 8, **dadurch gekennzeichnet, dass** jede Verkehrsstation (STi) ausgestaltet ist, um den besagten zweiten Verkehr zu übertragen, wenn kein Nutzverkehr für die Übertragung ansteht.

10. Netzwerk nach einem der Ansprüche 2 bis 8, **dadurch gekennzeichnet, dass** jede Verkehrsstation (STi) ausgestaltet ist, um Rahmen, welche den besagten zweiten Verkehr bilden, mit den Rahmen, welche den besagten Nutzverkehr, erhöht um den besagten ersten Verkehr, bilden und zur Übertragung anstehen, gemäß einem gewählten Verhältnis zu multiplexen.

11. Netzwerk nach einem der Ansprüche 2 bis 10, **dadurch gekennzeichnet, dass** jede Verkehrsstation (STi) ausgestaltet ist, um ihrem Nutzverkehr, erhöht um den besagten ersten Verkehr, einen zweiten Verkehr, welcher aus Stopfrahmen und Kontrollrahmen besteht, hinzuzufügen.

12. Netzwerk nach Anspruch 11, **dadurch gekennzeichnet, dass** die besagte Verwaltungszentrale (CG) ausgestaltet ist, um jeden empfangenen Rahmen an die Verkehrsstation (STi), welche ihn übertragen hat, zurückzusenden, und dass jede Verkehrsstation (STi) ausgestaltet ist, um die Zeit, welche jeder Kontrollrahmen benötigt, um zu dieser Verkehrsstation zurückzukehren, zu ermitteln und eine Überlastung des zweiten Verkehrs zu erfassen, wenn die besagte Zeit einen gewählten Grenzwert überschreitet.

13. Netzwerk nach Anspruch 11, **dadurch gekennzeichnet, dass** die besagte Verwaltungszentrale (CG) ausgestaltet ist, um die Empfangszeitpunkte der besagten Kontrollrahmen zu erfassen, ein Zeitintervall, welches die Empfangsmomente der aufeinanderfolgenden, von jeder Verkehrsstation (STi) kommenden Kontrollrahmen trennt, zu ermitteln, und ein Warnsignal an eine Verkehrsstation (STi) zu senden, wenn die Dauer, welche die Empfangszeitpunkte von aufeinanderfolgenden, von ihr übertragenen Kontrollrahmen trennt, einen gewählten Grenzwert überschreitet, und dass jede Verkehrsstation (STi) ausgestaltet ist, um eine Überlastung des zweiten Verkehrs zu erfassen, wenn ein Warnsignal von der besagten Verwaltungszentrale (CG) empfangen wird.

14. Netzwerk nach einem der Ansprüche 11 und 13, **dadurch gekennzeichnet, dass** jede Verkehrsstation (STi) ausgestaltet ist, um nummerierte Kontrollrahmen zu übertragen, dass die besagte Verwaltungszentrale (CG) ausgestaltet ist, um die jedem von jeder Verkehrsstation (STi) übertragenen Kontrollrahmen zugeordnete Nummer zu erfassen, und um ein Warnsignal an eine Verkehrsstation (STi) zu senden, wenn mindestens einer der von ihr nacheinander übertragenen Kontrollrahmen nicht empfangen wird, und dass jede Verkehrsstation (STi) ausgestaltet ist, um eine Überlastung des zweiten Verkehrs zu erfassen, wenn ein von der besagten Verwaltungszentrale (CG) gesendetes Warnsignal empfangen wird.

15. Netzwerk nach Anspruch 11, **dadurch gekennzeichnet, dass** jede Verkehrsstation (STi) ausgestaltet ist, um Kontrollrahmen, welche mit einem Zeitstempel versehen sind, der für einen im Verhältnis zu einem Taktgeber der besagten Verwaltungszentrale (CG) synchronisierten Erstellungszeitpunkt repräsentativ ist, zu übertragen, dass die besagte Verwaltungszentrale (CG) ausgestaltet ist, um den Empfangszeitpunkt eines jeden von jeder Verkehrsstation (STi) übertragenen Rahmens zu datieren, um die Übertragungsdauer eines jeden Kontrollrahmens ab seinem Erstellungszeitpunkt und seinem Empfangszeitpunkt zu ermitteln, und um ein Warnsignal an eine Verkehrsstation (STi) zu senden, wenn eine Variation der Übertragungsdauer eines von ihr übertragenen Kontrollrahmens erfasst wird, und dass jede Verkehrsstation (STi) ausgestaltet ist, um eine Überlastung des zweiten Verkehrs zu erfassen, wenn ein von der Verwaltungszentrale (CG) gesendetes Warnsignal empfangen wird.

16. Netzwerk nach einem der Ansprüche 13 bis 15, **dadurch gekennzeichnet, dass** die besagte Verwaltungszentrale (CG) ausgestaltet ist, um Warnsignale, welche aus einem binären Indikator bestehen, zu übertragen.

17. Netzwerk nach einem der Ansprüche 13 und 14, **dadurch gekennzeichnet, dass** die besagte Verwaltungszentrale (CG) ausgestaltet ist, um Warnsignale, die aus einem Zahlenwert, welcher für eine bestimmte Dauer, wenn diese den besagten Grenzwert überschreitet, und/oder für die Anzahl von nicht empfangenen Kontrollrahmen repräsentativ ist, bestehen, zu übertragen.

18. Netzwerk nach Anspruch 15, **dadurch gekennzeichnet, dass** die besagte Verwaltungszentrale (CG) ausgestaltet ist, um Warnsignale, welche aus einem für die Amplitude einer erfassten Variation der Übertragungsdauer repräsentativen Zahlenwert bestehen, zu übertragen.

19. Netzwerk nach einem der Ansprüche 13 bis 18, **dadurch gekennzeichnet, dass** die besagte Verwaltungszentrale (CG) ausgestaltet ist, um jede Abschwächung des Empfangs von Verkehr und jede Verschlechterung einer Verbindung (Li) zu erfassen, und um, wenn während einer Dauer, welche einen gewählten Grenzwert überschreitet, kein von einer Verkehrsstation (STi) gesendeter Kontrollrahmen empfangen wird, ein Warnsignal an diese Verkehrsstation (STi) zu senden, welches die Unmöglichkeit des Treffens einer Entscheidung signalisiert.

20. Netzwerk nach einem der Ansprüche 12 bis 19, **dadurch gekennzeichnet, dass** jede Verkehrsstation (STi) ausgestaltet ist, um bei Erfassen einer Überlastung des zweiten Verkehrs das Hinzufügen des zweiten Verkehrs aufrecht zu erhalten und die Ressourcen, welche vor der besagten Erfassung einer Überlastung des zweiten Verkehrs verfügbar waren, als zugewiesene Ressourcen zu betrachten.

21. Netzwerk nach einem der Ansprüche 12 bis 19, **dadurch gekennzeichnet, dass** jede Verkehrsstation (STi) ausgestaltet ist, um bei Erfassen einer Überlastung des zweiten Verkehrs den besagten zweiten Verkehr bis zur Aufhebung der besagten Überlastung des zweiten Verkehrs schrittweise zu reduzieren und die Ressourcen, welche zum Zeitpunkt der besagten Aufhebung verfügbar sind, als zugewiesene Ressourcen zu betrachten.

22. Netzwerk nach einem der Ansprüche 12 bis 19, **dadurch gekennzeichnet, dass** jede Verkehrsstation (STi) ausgestaltet ist, um, wenn keine Überlastung des zweiten Verkehrs vorliegt, den besagten zweiten Verkehr bis zum Erfassen einer Überlastung des zweiten Verkehrs schrittweise zu erhöhen und die Ressourcen, welche vor der besagten Erfassung einer Überlastung des zweiten Verkehrs verfügbar waren, als zugewiesene Ressourcen zu betrachten.

23. Netzwerk nach Anspruch 17, **dadurch gekennzeichnet, dass** bei Vorhandensein von Warnsignalen, welche aus einem Zahlenwert, der für eine Dauer, welche die Empfangszeitpunkte von aufeinanderfolgenden Kontrollrahmen trennt, repräsentativ ist, bestehen, jede Verkehrsstation (STi) ausgestaltet ist, um den besagten zweiten Verkehr mit einem Wert gemäß der Differenz zwischen dem Zahlenwert des empfangenen Warnsignals und einem durchschnittlichen Wert des besagten Zahlenwerts zu modulierten.

24. Netzwerk nach einem der Ansprüche 20 bis 23, **dadurch gekennzeichnet, dass** jede Verkehrsstation (STi) ausgestaltet ist, um bei Erfassen einer Unzulänglichkeit der von ihr zugewiesenen Ressourcen Rahmen auf Übertragungskanälen ihrer Verbindung (Li), welche vor der besagten Erfassung nicht aktiv waren, zu löschen.
